# EUROPEAN PATENT SPECIFICATION

(11) **EP 4 176 195 B1**
(45) Date of publication and mention of the grant of the patent: **03.12.2025**
(21) Application number: 21782802.9
(22) Date of filing: 01.07.2021
(51) Int. Cl.: B01F 23/232, B01F 23/2373, B01F 25/312, F16L 55/027

(54) **MICRO AND NANO BUBBLES GENERATOR DEVICE**
MIKRO- UND NANOBLASENGENERATORVORRICHTUNG
DISPOSITIF GÉNÉRATEUR DE MICRO ET DE NANO-BULLES

(30) Priority: 06.07.2020 IT 202000016327
(43) Date of publication of application: 10.05.2023
(73) Proprietor: OMITALY SRL, 20087 Robecco sul Naviglio (MI) (IT)
(72) Inventor: GALBIATI, Alessandro, 20087 Robecco Sul Naviglio (Milano) (IT); GALBIATI, Massimo, 20087 Robecco Sul Naviglio (Milano) (IT); GALBIATI, Andrea, 20013 Magenta (Milano) (IT); GALBIATI, Davide, 20011 Corbetta (Milano) (IT)
(74) Representative: Tansini, Elio Fabrizio
(86) International application number: PCT/IB2021/055909
(87) International publication number: WO 2022/009035

(56) References cited:
- EP-A1- 3 130 395
- EP-A2- 0 165 228
- WO-A1-2012/108035
- US-A- 3 338 173
- US-A- 5 159 958
- US-A- 5 302 660

## Description

### Technical field

The present invention relates to a device for the generation of micro and nano bubbles of gas inside a liquid that passes through it.

In particular, the device of the present invention generates micro and nano bubbles of air inside water. In other words, the present invention relates to a device for treating a fluid that passes through it longitudinally.

The device of the present invention is applied in the civil, industrial, agricultural, chemical, floricultural and food fields, for the treatment of water in the recreational field (swimming pools, spas, whirlpools) animal grooming, groundwater, aquaculture, fish farming.

In the following description, for simplicity purposes, reference is made to a device for the generation of micro and nano bubbles inside water, but the device described herein is adapted for treating any other liquid with any other gas (e.g. ozone, oxygen, or other gases).

### Prior art

Bubbles can be classified as micro bubbles, micro-nano bubbles and nano bubbles according to their diameter.

In particular, micro bubbles are bubbles generated with a diameter from 10 µm to numerous tens of micrometers, e.g. 50 µm.

Micro-nano bubbles are bubbles generated with diameters from various hundreds of nanometres to 10 µm.

Nano bubbles are bubbles generated with a diameter no greater than various hundreds of nanometres.

It is to be noted that micro bubbles are partially transformed into micro-nano bubbles through contraction movements after generation.

Furthermore, nano bubbles have properties such for which they can remain suspended in a liquid for a long period of time.

Various research has demonstrated the existence of surface nano bubbles. Instead, less research has been carried out on the existence of nano bubbles in dispersion (or "bulk nano bubbles").

Nano bubbles have various unique physical properties that make them very different from a normal bubble. The most significant of which is their long stable lifetime in liquid because of their very low buoyancy. Instead of rising vertically they can remain suspended in liquids for months. Nano bubbles of air have a surface which is negatively charged (negative zeta potential).

For example, the efficiency with which nano bubbles can replace detergents in washing linen has been studied. It has been estimated that mechanical action represents 50% of the washing effect and nano bubbles can reach the same level. The combination of nano bubbles and reduced amounts of detergents leads to a 10% increase in the washing efficiency (Ushida et al. 2011).

The results of studies on mixtures of nano bubbles in water or glycerol passed through orifices and capillaries of various sizes suggest that the addition of nano bubbles to liquids drastically reduces the friction and resistance thereof. (Ushida et al. 2013).

When the roots of plants are exposed to nano bubbles enriched with oxygen combined with a high dissolved oxygen content, they can absorb nutrients more effectively, which translates into higher yields.

In hydroponics, nano bubbles notably help plant growth.

Simple devices are known for the generation of bubbles through systems which exploit the Venturi effect.

More complex devices for the generation of nano and micro bubbles which use, for example, the injection of compressed air into water are also known.

A disadvantage of known devices comes from the complexity and the need to use external energy sources, both thermal and electrical, in order to be able to generate air bubbles.

Another disadvantage of known devices comes from the pressure drops normally necessary for obtaining the envisaged result.

A further disadvantage of known devices comes from back pressure when the pipe is partially closed, at the outlet or inlet, even only by 30%; notoriously the devices currently on the market have operating problems using a simple Venturi system.

Another disadvantage of known devices is that of being able to provide good air suction, adapted to generate nano and micro bubbles for the purpose of obtaining the envisaged results, also in the presence of possible drops in flow rate at the inlet or any closures at the outlet.

A device in accordance with the preamble of claim 1 is known from documents EP 0 165 228 A2 and WO 2012/108035 A1.

### Object of the invention

The present invention relates to a device for the generation of micro and nano bubbles of air inside a liquid as defined in appended claim 1 and by the preferred embodiments thereof disclosed in the dependent claims 2 to 12. Use of the device is disclosed in claim 13.

The Applicant has perceived that the device for the generation of micro and nano bubbles of air in accordance with the present invention allows a reduction in the pressure drops normally necessary to obtain the expected result.

Another advantage of the present invention is that it enables external energy sources, both thermal and electrical, not to be used.

A further advantage of the present invention is that of enabling good suction to be provided, adapted to generate nano and micro bubbles for the purpose of obtaining the envisaged results, despite possible drops in flow rate at the inlet or any closures at the outlet.

Another advantage of the present invention is that of enabling the micro and nano bubbles generated to be calibrated in size.

A further advantage of the present invention is that of enabling the treatment of water, through aeration, without the use of chemical products, with operating ease, with sustainable costs and installation ease in industrial water treatment plants.

Another advantage of the present invention is that of reducing back pressure problems when the pipe at the outlet or inlet to the device is partially closed, even only by 30%.

A further advantage of the present invention is that the device is simple and economical to make and assemble.

The technical effects/advantages mentioned, and other technical effects/advantages of the invention, will emerge in further detail from the description provided herein below of an example embodiment provided by way of approximate and non-limiting example with reference to the appended drawings.

### Brief description of the drawings

Additional features and advantages of the invention will become more apparent from the description which follows of a preferred embodiment and the variants thereof, provided by way of example with reference to the appended drawings, in which:
- figure 1 depicts a view of the outer casing of the device for the generation of micro and nano bubbles of gas in a liquid;
- figure 2 depicts an axial view of the casing of figure 1, from the water inlet side;
- figure 3 depicts a section along line III-III of figure 2 according to a first embodiment not forming part of the invention;
- figure 3a depicts a section along line III-III of figure 2 according to a variant of the first embodiment of the invention;
- figure 4 depicts a section along line IV-IV of figure 2 according to a second embodiment of the invention;
- figure 4a depicts a section along line IV-IV of figure 2 according to a variant of the second embodiment of the invention;

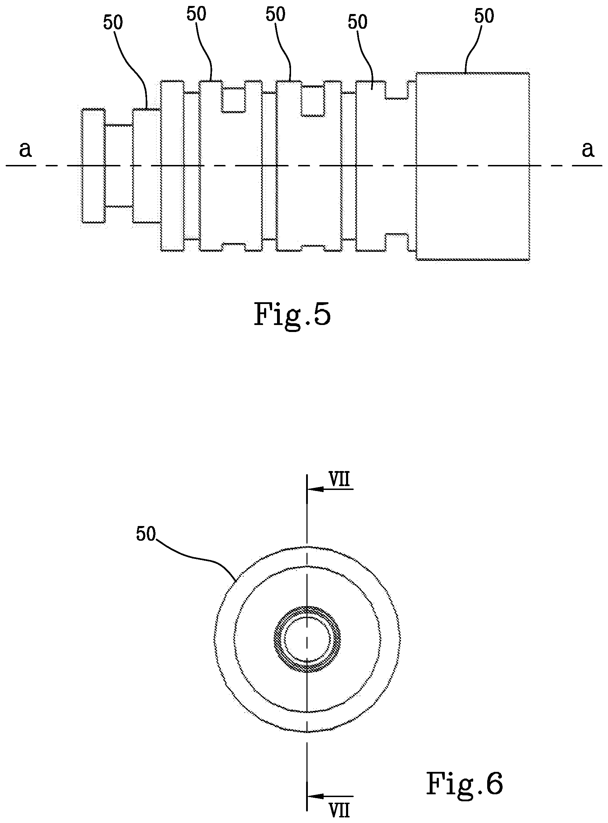

- figure 5 depicts a detail of the central body of figure 4;
- figure 6 depicts an axial view of the detail of figure 5;

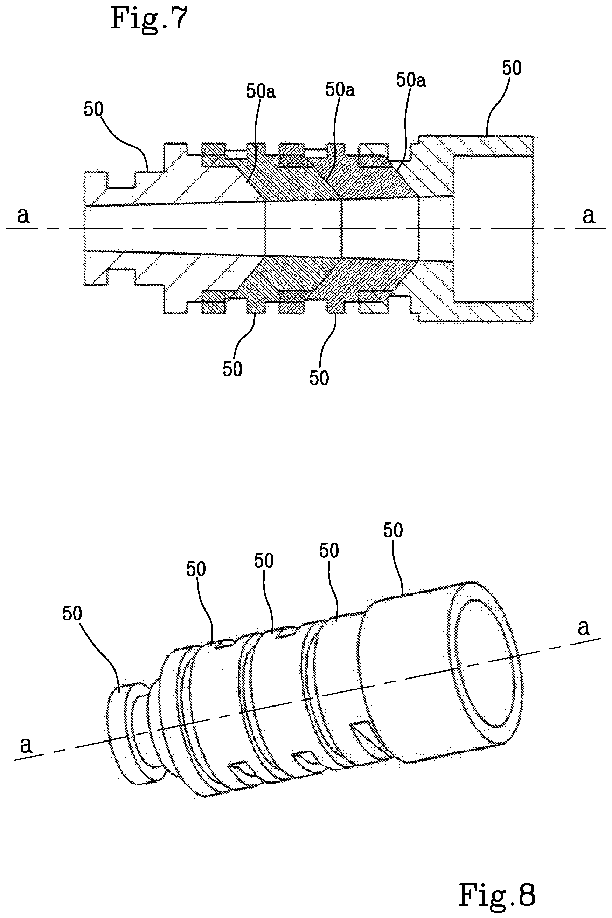

- figure 7 depicts a section along the line VII-VII of figure 6;
- figure 8 depicts a perspective view of the central body of figure 5;

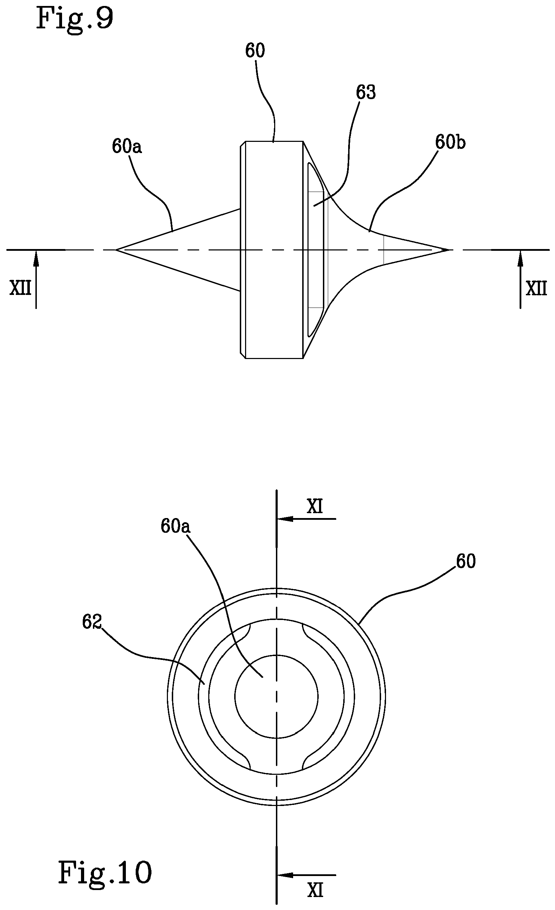

- figure 9 depicts a detail of the wedge-shaped element of figures 3 and 4;
- figure 10 depicts an axial view of the wedge-shaped element of figure 9 from the liquid inlet side;

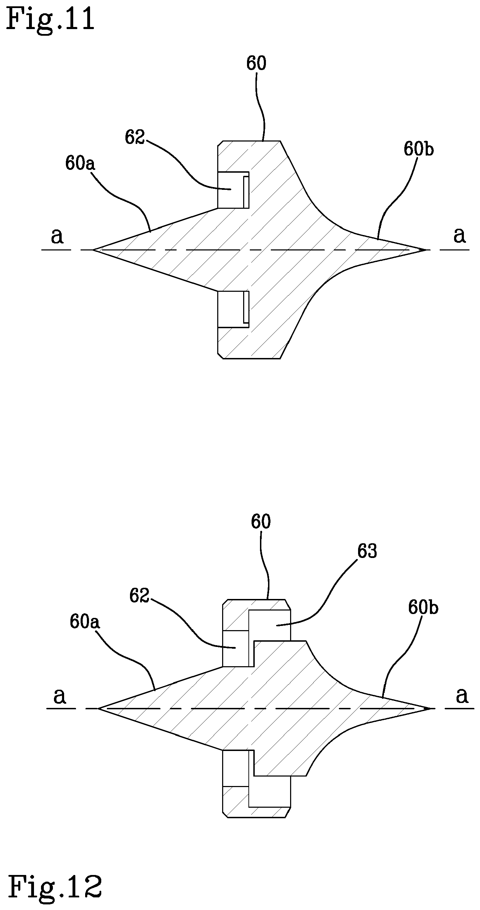

- figure 11 depicts a section along the line XI-XI of figure 10;
- figure 12 depicts a section along the line XII-XII of figure 9;

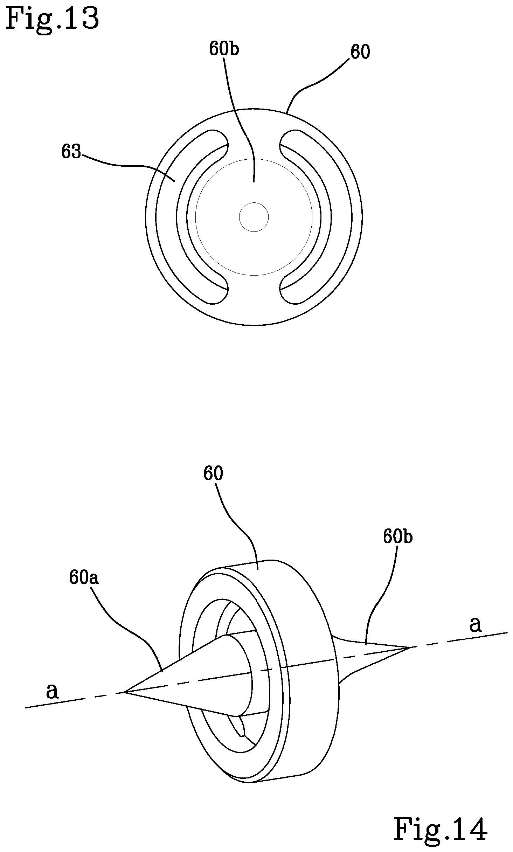

- figure 13 depicts an axial view of the wedge-shaped element of figure 9 from the liquid outlet side;
   - - figure 14 depicts a perspective view of the wedge-shaped element of figure 9;

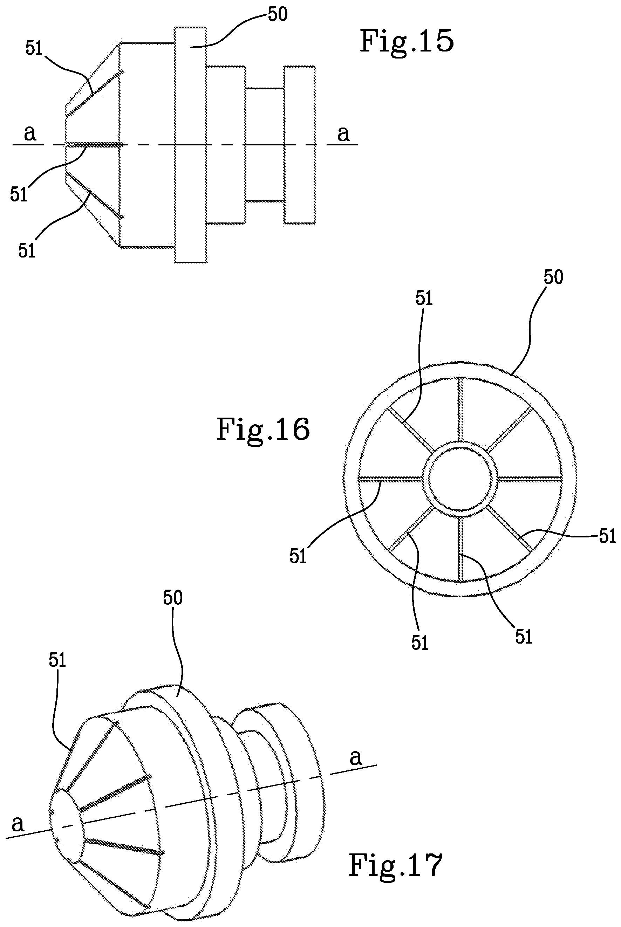

- figure 15 depicts a conical spacer of the central body of the second embodiment;
- figure 16 depicts an axial view of figure 15 from the liquid inlet side;
- figure 17 depicts a perspective view of figure 15;

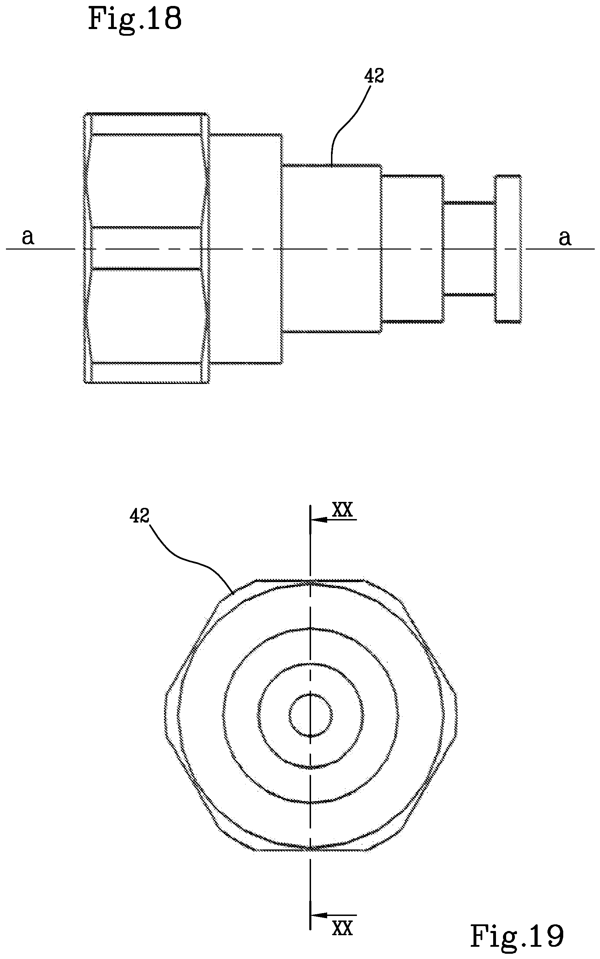

- figure 18 depicts a side view of the air intake;
- figure 19 depicts an axial view of the air intake of figure 18;

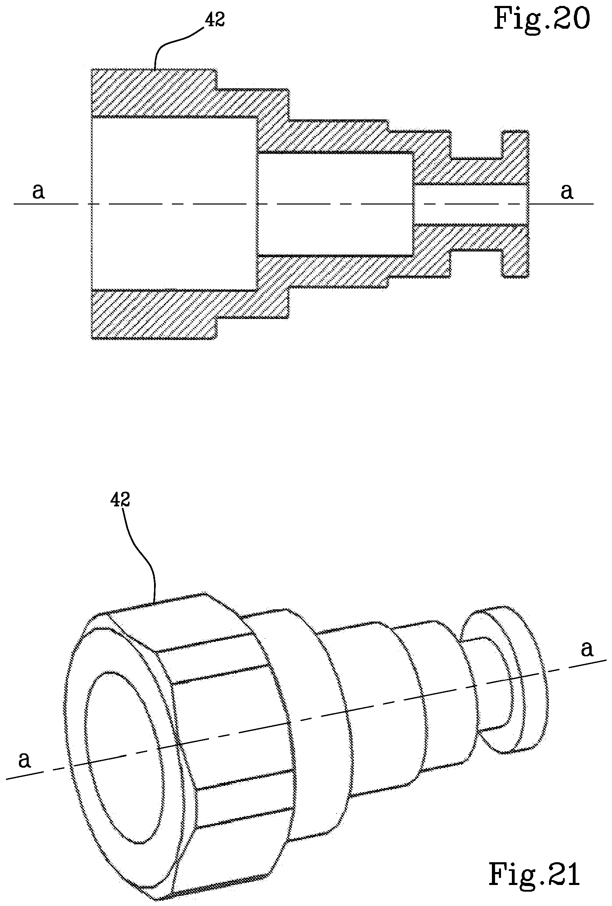

- figure 20 depicts a section along the line XX-XX of figure 19;
- figure 21 depicts a perspective view of the air intake of figure 18.

### Detailed description of preferred embodiments of the invention

The device for the generation of micro and nano bubbles of gas inside a liquid according to the present invention is indicated in the appended figures with reference numeral 1.

The device 1 is mainly intended to be installed on a civil or industrial water system, in proximity to the point of use.

The passage of fluid through the device 1 enables the generation of micro and nano bubbles of gas which are suitable for multiple applications.

In the appended figures, the liquid enters on the left side of the device 1 and exits on the right side.

The device 1 is a conduit which enables the passage of liquid has an outer tubular shape 10, which is substantially elongated along a longitudinal axis *a-a.*

The outer casing 10 contains inside it the various elements described below.

The outer tubular body 10 can be made of stainless steel 316L or titanium. In the outer part of the tubular casing 10 there is a threaded hole (not shown in the appended figures) which allows a cable to be housed having the function of grounding so as to interrupt possible dispersed or stray electric currents.

The attachment of the liquid inlet 2 has a special seat for the connection with the general water pipe.

The element 2 is preferably made of polyethylene for food use and has the function of interrupting the passage of any stray currents present in the system, reinforcing the advantages generated by the use of the device 1. Likewise, to the right of the device 1, there is an outlet fitting 3 for the liquid containing the micro and nano bubbles of gas, also made of polyethylene for food use.

Still following the flow of liquid at the inlet, from left to right, after the inlet fitting 2 there is an inlet 20 for the flow of liquid having a smaller volume than the inlet fitting 2.

In this way a depression is obtained in the flowing liquid which causes an acceleration of the flow of water at the inlet.

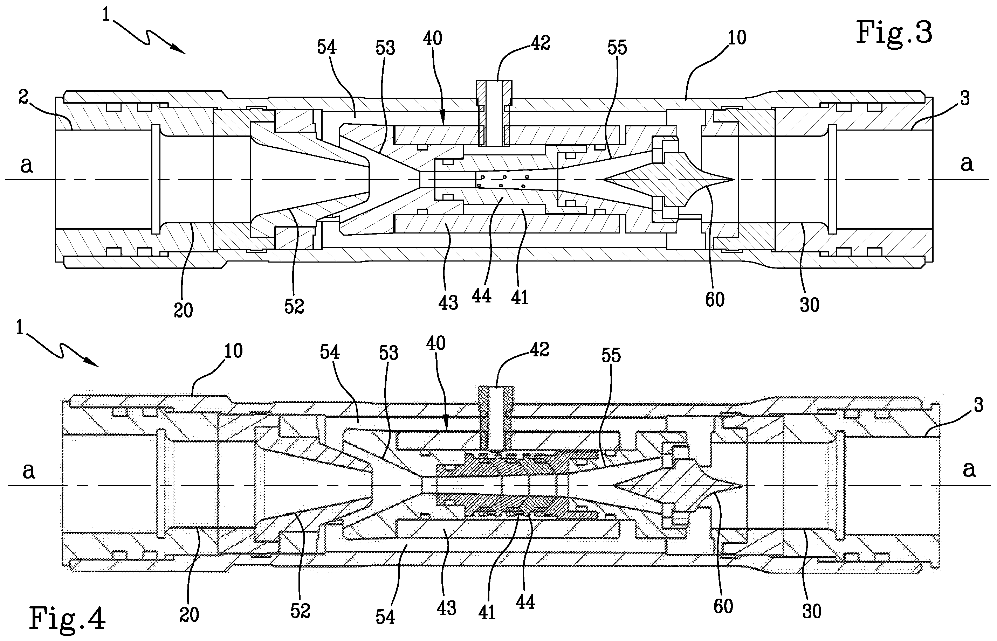

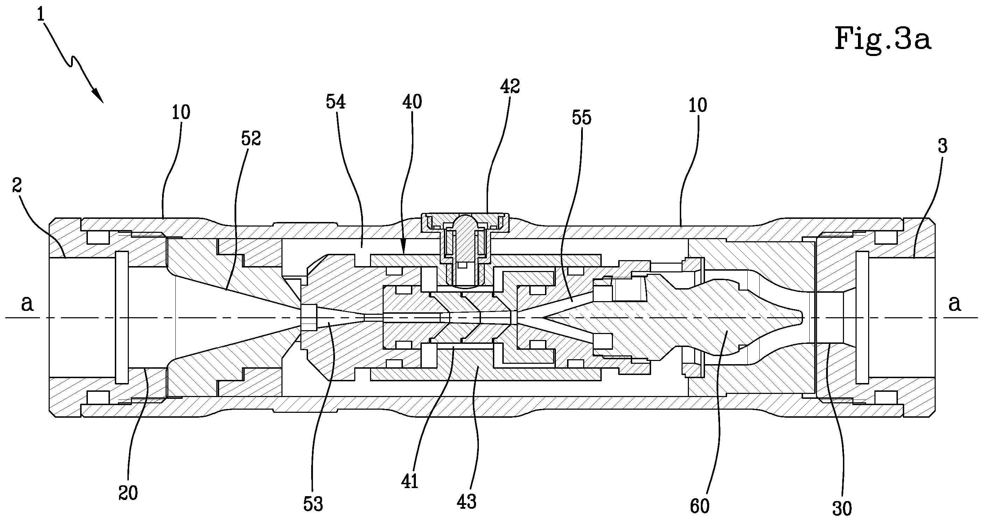

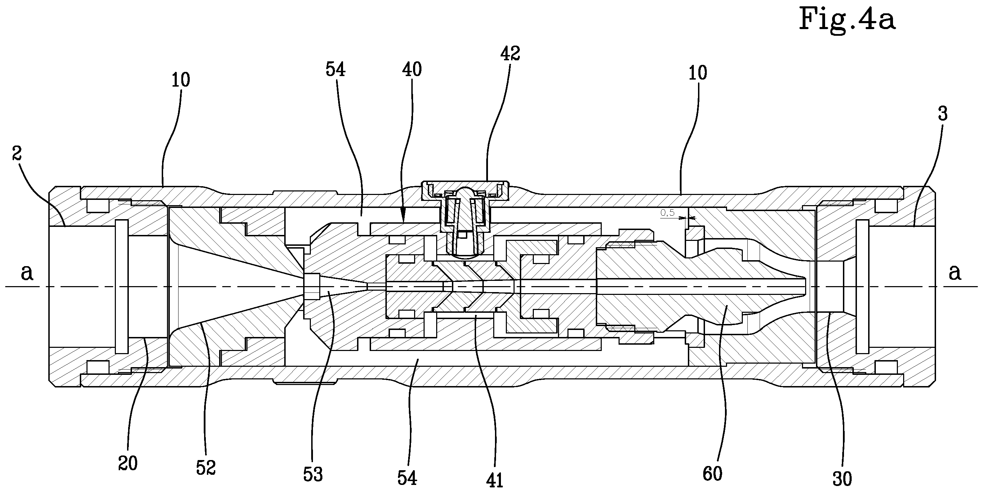

Subsequently, there is a central body 40, which can be seen in figures 3 and 4, contained in a central area within the outer tubular body 10, the central body 40 comprises a pre-chamber 41 containing a gas, an air intake 42 which places in gas connection the pre-chamber 41 with an external source of gas, a conical shaped converging element 52, configured to concentrate the flow of liquid at the inlet towards a Venturi chamber 44 in fluid contact with the pre-chamber 41, configured to suck the gas from the pre-chamber 41 and generate micro and nano bubbles of gas in the liquid that passes through it.

The air intake 42 is configured to hermetically close the pre-chamber 41, preventing it from being filled with liquid, as well as to prevent water from leaking out of the pipe. On the outside there are two membranes: the first membrane enters into the element 43 and the second onto the element 10.

The wider inner part of the air intake 42 has a thread onto which a one-way non-return valve is applied (the latter enables the passage of the gas sucked from the outside of the device 1).

The first conicity encountered by the liquid at the inlet determines a deviation of the liquid from the walls of the flowing conduit. This implies a consequent suction process of the gas present in the pre-chamber 41.

Therefore, the converging element 52 concentrates the liquid towards the inlet mouth of the Venturi chamber 44 and reduces hydrostatic pressure. At the outlet from the central body 40, there is an outlet conduit 30 of the flow of liquid, containing the micro and nano bubbles generated inside it, in fluid communication with said inlet 20.

As illustrated in figures 3 and 4, the Venturi chamber 44 is partially conical and diverging from left to right.

In particular, in the conical part, the wall of the Venturi chamber 44 forms an angle with respect to the longitudinal axis *a-a* comprised between 0.1 and 3.5 degrees.

Preferably, said angle is comprised between 1.5 degrees and 3.5 degrees inclination.

The very reduced dimensions of the central passage 44 with respect to the diameter of the starting conduit 2 of the device 1 have the function of enabling the device 1 to also operate with the creation of a possible back pressure generated by a partial closure of the system at the outlet, up to a maximum of 80%, or a possible obstruction at the inlet with consequent supply deficit up to a minimum of 0.5 bar pressure.

In the event of very high pressure at the inlet, e.g. greater than 3 or 4 bar, despite the central hole being small, the device 1 enables pressure drops to be limited because there is a concentric outer outflow conduit 54, in which any excess liquid flows.

The diameter of the mouthpiece of the Venturi chamber 44 is comprised between 1/5 and 1/12 of the diameter of the inlet 20.

In a first disclosed embodiment, not forming part of the invention, the contact between the liquid which flows in the Venturi chamber 44 and the gas in the pre-chamber 41 is obtained by a plurality of holes, whose diameter, which is very reduced in proportion to the thickness of the chamber, causes the creation of resistance at the air inlet in the central fluid. In doing so, the aeration process is generated through the creation of micro and nano bubbles.

Preferably the holes may be round, hexagonal or octagonal, according to requirements and the intended use. The size of the holes is very small, it can vary from a minimum diameter of 0.2 mm to a maximum of 1 mm. The size is established as a function of the depth of the through conical hole for the central body in order to generate a suction difficulty which leads to the generation of micro and nano bubbles.

In a second disclosed embodiment, in accordance with the invention, the Venturi chamber 44 is comprised of a plurality of adjacent conical spacers 50, aligned longitudinally along the longitudinal direction a-a of the liquid flow and engaged in one another.

In this embodiment, each contact plane 50a between the adjacent spacers 50 comprises a plurality of passages 51 configured to place the pre-chamber 41 in connection with the Venturi chamber 44.

The surface 50a of each spacer 50 has a predetermined and variable roughness, able to constitute the passages of the gas, the level of which determines the quantity and size of the micro and nano bubbles of gas.

In this embodiment, the Venturi chamber 44 has the feature of not being comprised of a single piece but of a sequence of conical spacers 50 engaged in one another and fixed together through threads or, alternatively, through forced interferences.

Such modularity enables rapid assembly and the possibility to have Venturi chambers of any desired length.

The assembly of the spacers 50 leads to obtaining a Venturi chamber having the same geometry as the Venturi chamber according to the first embodiment, except for the absence of holes. The suction step in this case is then obtained through the relevant passages created deliberately on the adjacent planes 50a, which may be, for example, inclined planes.

The spacers 50 can also have other geometric configurations.

It is also possible to have holes on the side surfaces of some or all of the conical spacers 50, so that the passage of gas from the pre-chamber 41 to the Venturi chamber 44 takes place both through the holes and through the channels 51.

The central channel for both embodiments will therefore be studied based on the intended use and the characteristics of the conduit on which it is installed and will be a lot smaller than the dimensions of the water system pipe, for the purpose of promoting the creation of the desired oxygenation and aeration.

The aeration valve 42 present in both embodiments has the function of connecting a gas tank external to the device to the pre-chamber 41.

In particular, if the gas is air collected from the external environment, the air intake 42 connects the external environment to the device with the pre-chamber 41.

Preferably, between the conical converging element 52 and the inlet of the Venturi chamber 44 a splitter 53 is arranged, configured to direct any flow of excess liquid towards an outflow channel (54), concentric to the Venturi chamber 44.

The converging element 52, present in both embodiments, has the function of directing the flow of liquid towards the splitter 53 obliging it to accelerate its stroke and make more liquid flow into the restriction channel. In this way, even if in the end part of the water system the delivery is closed, thanks to the presence of the splitter, with a smaller passage diameter, the creation of final oxygenation or aeration would be guaranteed in any case up to about 80% of the conduit.

The capacity to put the flow of liquid in circulation directing it into the upper part 45 is fundamentally important as it enables the device never to lose flow rate.

The splitter 53 has the function of directing the flow of liquid into the central part of the device 1. The conicity of the element 53 enables the flowing fluid to accelerate its path reducing the pressure. The spacer can have a milling whose function is to enable the excess fluid to flow freely towards the outflow conduit 45 so as not to create a drop in flow rate.

The outflow conduit 54 is external and concentric to the Venturi chamber 44.

At the outlet from the Venturi chamber 44, there is a diverging element 55, configured to create a depression followed by a liquid suction process. Inside it there is a detail, defined as an "umbrella" or wedge-shaped profile 60, which has the purpose of promoting the flow of the liquid at the outlet from the Venturi chamber 44.

In the end part there is an opening adapted to collect the liquid at the outlet.

In particular, the device 1 comprises a wedge-shaped profile 60 housed between the diverging element 55 and the outlet conduit 30.

In particular, the wedge-shaped profile 60 is positioned inside the diverging element 55.

The wedge-shaped profile 60 is positioned at the outlet hole of the liquid from the diverging element 55.

The wedge-shaped profile 60 has a wedge 60a, 60b in each longitudinally opposite side to the axis a-a. Each wedge 60a, 60b has a conical or paraboloid shape.

The presence of the wedge-shaped profile 60 has the fundamental task of eliminating the water hammer generated by the back pressure that would arise if the delivery at the outlet were partially closed.

This effect is generated thanks to the geometry of the element 60. In fact the curve thereof at the outlet makes sure that the return force is discharged into the outer conduit.

In this way the central flow of liquid does not undergo any water hammer.

In the wedge-shaped profile 60 there are two openings or passages 62 and 63, the first passage 62 positioned on a restricted diameter with respect to the subsequent passage 63, in order to enable the water hammer to be neutralised.

The central body 40 of the device 1 is inserted into a sleeve 43 in both embodiments, so as to enable the pre-chamber 41 to be generated, in a vacuum, to create a gas tank communicating with the outside of the device 1, able to supply the micro and nano bubble generation process in the liquid.

The anchoring and positioning of the central body 40 inside the outer tubular element 10 takes place through the use of one or more anchoring spacers.

All of the various elements are assembled using rubber O-ring gaskets, the function of which is to prevent the leakage of liquid between the device 1 and the water system on which it is installed and to create a watertight seal between the outer tubular element 10 and the sleeve 43 of the central body 40.

In both of the embodiments described, the converging element 52, the splitter 53, the Venturi chamber 44, the aeration valve 42, the diverging element 55, the wedge-shaped profile 60 and the sleeve 43 can be made of brass with a low lead content, aluminium, plastics of various kinds (materials subject to subsequent galvanic silver treatment), stainless steel 316L, titanium.

The assembly of the device 1 for the generation of micro and nano bubbles implies the sequential steps described below.

### First step

A locking spacer is inserted into the outer tubular body in proximity to the inlet 20, locating it in a defined position.

### Second step

The wedge-shaped profile 60 is screwed to the diverging element 55 until complete locking.

### Third step

The mounting of the entire central part 40 is carried out, from the converging element 52 (liquid inlet area) to the diverging element 55 (liquid outlet area).

The converging element 52 is assembled to the splitter 53, e.g. through a diameter interference.

The splitter element 53 is locked to the central body 40 by means of the interference generated by an O-ring gasket.

The specification related to the assembly of the central body 40 is described below in the eighth step.

A sleeve 43 is anchored to the splitter 53, e.g. through the interference generated by an O-ring gasket.

The diverging element 55 and the wedge-shaped profile 60 are inserted into the sleeve 43, with locking guaranteed by the presence of O-ring gaskets.

### Fourth step

The entire central block 40 assembled in the third step is inserted into the outer tubular body 10 until the converging element 52 is inserted into a second locking spacer element.

### Fifth step

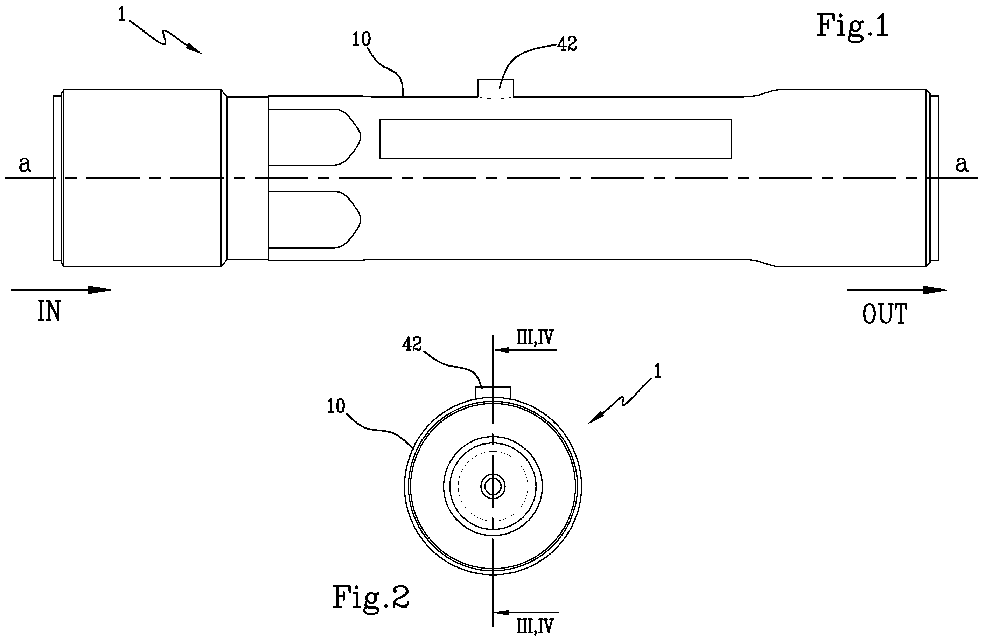

As can be seen from figures 1 and 2, the sleeve 43 will have the possibility to be able to be moved by a few mm in order to enable easier insertion of the air intake 42, an operation that would otherwise be impossible to carry out.

### Sixth step

The second locking spacer is inserted at the outlet and pushed with a hydraulic press until the desired position is obtained.

### Seventh step

An inlet fitting 2 and an outlet fitting 3 are inserted, for example, by screwing them through threading until they are completely tight.

Both of the fittings 2 and 3 comprise grooves for the housing of O-ring gaskets adapted to prevent the leakage of liquid.

### Eighth step

The central body 40, once assembled, is presented as a single body, therefore it is simply inserted into the outer tubular body 10.

The central body 40 of the second embodiment illustrated in figure 4 (model B) is comprised of various adjacent conical spacers 50 which can be assembled to one another through screwing on the thread or, alternatively, locked by diameter interference.

The assembly of adjacent conical spacers 50, once assembled, has the same identical outer geometric characteristics as the central body 40 of figure 3 (model A).

In a variant of the first and second embodiment of the present invention, represented in figures 3a and 4a, the device 1 has small variations which enable it to be used for conduits with very small sections, by way of non-limiting example for shower heads and the like.

The device 1 is the same one previously described. In fact, we have all the elements already present in the first and the second embodiments illustrated in figures 3 and 4, with two small modifications, one at the inlet to promote the flow of liquid into the central body 40, and one at the outlet for almost completely eliminating the presence of any back pressure generated by a partial closure of the conduit in its very end part.

The two variations can be adapted both to the device of figure 3 and to the one of figure 4 as the central body 40 can comprise both a plurality of holes (figure 3) and a plurality of conical spacers 50 (figure 4) as described above.

The inlet variation is identical both for the device illustrated in figure 3a and for the one in figure 4a.

In particular, the converging element 52 and the splitter 53 are brought into direct contact, so as to oblige the inlet fluid to flow towards the centre, taking this force to the extreme.

Furthermore, in the device 1 there is a milling so as to give the excess liquid the possibility to be discharged into the outer conduit, in order to prevent pressure drops as much as possible.

In applications of the device 1 in which there is a good flow rate of liquid at the inlet, it is preferable to use the solution illustrated in the first and second embodiments represented in figures 3 and 4.

In the variant of figure 3a, the "umbrella" or wedge-shaped profile 60, in its first part, is the same as that of figure 3. The central outer part has been modified, in order to protect the flow of any back pressure, hiding the outlet of fluid present below the diverging element 55 present at the outlet of the Venturi chamber 44.

The final part of the wedge-shaped element 60 has also been elongated so as to create a particular profile with the element 80 in order to generate again an acceleration of the flow of liquid adapted to create a force able to prevent the back pressure from cancelling the initial Venturi effect. In other words, the wedge-shaped element 60 and the profile 80 create a second restriction to the flow of liquid towards the outlet.

In figure 4a, the umbrella 60 has a central through hole, with a simpler construction, used where the back pressures are more reduced. All the rest will be the same as in figure 3a.

The suction and sealing valve 42 is inserted into the outer tubular body 10, and may, for example, be a solenoid valve.

The present invention achieves the following technical effects:
- Generation of micro and nano bubbles, also guaranteed in the event of any back pressure due to partial closures of the water system at the outlet or at the inlet.

The presence of the splitter 53 and of the outflow channel 45, which direct the excess liquid, which thus finds an outlet into a channel created inside the instrument, therefore the liquid can flow through the device generating micro and nano bubbles without any pressure drops.
- Promotion of the separation of different liquids, facilitating the recovery of the various substances contained if necessary.
- Reduction of the need to use cleaning products in civil and industrial washing applications.
- Possibility to dismount the central body 40 to enable easy management of the flows of gas and liquid inside reduced spaces, as well as enabling the periodic cleaning of the channel to facilitate the cleaning and maintenance thereof if necessary (a dedicated "maintenance kit" is to be provided).
- Reduction of the amount of water needed, based on the intended use, given the presence of micro and nano bubbles, a particularly favourable factor in areas of use where partial system closures are envisaged (agricultural, nursery, fishing, pharmaceutical sectors, etc.).
- Possibility to modulate the quantity and size of the gas bubbles adapting the generated effect to the use requirements.
- As the device 1 is completely made of titanium, a material that is particularly suitable for applications in the medical sector, or of alternative materials to those described based on the intended use, it can be widely used in different application sectors.
- The galvanic silver plating treatment of the elements of the device 1 allows a reduction of the bacteria present in the water, or in any other liquid.

It is clear that the specific features are described in relation to different embodiments of the invention with an exemplary and non-limiting intent. Obviously a person skilled in the art can make further modifications and variants to the present invention, without departing from the scope of the appended claims, in order to satisfy contingent and specific needs.

## Claims

1. Device (1) for the generation of micro and nano bubbles of gas in a liquid comprising:
an outer tubular body (10) with an extension along a longitudinal axis a-a;
an inlet (20) for a flow of liquid;
an outlet (30) of the flow of liquid in fluid communication with said inlet (20);
a central body (40) contained in a central area within said outer tubular body (10) comprising:
- a pre-chamber (41);
- an air intake (42) in connection with an external source of gas;
- the pre-chamber (41) being in connection with said air intake and configured to receive gas through said intake (42) from said external source of gas;
- a converging element (52) configured to concentrate the flow of the incoming liquid;
- a Venturi chamber (44) in fluid contact with said pre-chamber (41) configured to suck gas from the pre-chamber (41) for generating micro and nano bubbles of gas in the liquid when said liquid flow passes through it;
wherein the Venturi chamber (44) is comprised of a plurality of conical spacers (50) aligned longitudinally along the a-a direction of the liquid flow and engaged in one another, each contact plane (50a) between the spacers (50) comprising passages (51) configured to place the pre-chamber (41) in connection with the Venturi chamber (44), **characterized in that** said passages (51) of the gas from the pre-chamber (41) to the Venturi chamber (44) are provided by a certain roughness of the contact surfaces (50a) of each spacer (50).

2. The device (1) according to claim 1, wherein the Venturi chamber (44) is partially conical and diverging.

3. The device (1) according to claim 2, wherein the wall of the Venturi chamber (44) forms an angle with respect to the longitudinal axis a-a comprised between 0.1 and 3.5 degrees.

4. The device (1) according to one or more of the preceding claims, wherein the diameter of the mouthpiece of the Venturi chamber (44) is comprised between 1/5 and 1/12 of the diameter of the inlet (20).

5. The device (1) according to one or more of the preceding claims, wherein the contact between the fluid flowing in the Venturi chamber (44) and the gas present in the pre-chamber (41) is obtained through a plurality of holes.

6. The device (1) according to one or more of the preceding claims, comprising a splitter (53) interposed between said converging element (52) and the inlet of the Venturi chamber (44) configured to direct any flow of excess liquid towards the central part of the device (1).

7. The device (1) according to claim 6, comprising an outflow channel (54) of the excess liquid diverted by the splitter (53).

8. The device (1) according to claim 7, wherein the outflow conduit (54) is external and concentric to the Venturi chamber (44).

9. The device (1) according to one or more of the preceding claims, comprising a diverging element (55) at the outlet of the Venturi chamber (44).

10. The device (1) according to claim 9, comprises a wedge-shaped profile (60) between said diverging element (55) and the outlet (30).

11. The device (1) according to claim 10, wherein said wedge-shaped profile (60) is positioned at the outlet hole of the liquid from the diverging element (55).

12. The device (1) according to claim 10 or 11, wherein said wedge-shaped profile (60) has a wedge (60a, 60b) in each opposite longitudinal side.

13. Use of the device (1) according to one or more of the preceding claims for the generation of micro and nano bubbles of gas in a liquid, wherein the gas is air and the liquid is water.

## Patentansprüche

1. Vorrichtung (1) für die Erzeugung von Mikro- und Nanogasblasen in einer Flüssigkeit, umfassend:
einen äußeren rohrförmigen Körper (10) mit einem Verlauf entlang einer Längsachse a-a;
einen Einlass (20) für einen Flüssigkeitsstrom;
einen Auslass (30) für den Flüssigkeitsstrom in Fluidverbindung mit dem genannten Einlass (20);
einen zentralen Körper (40), der in einem zentralen Bereich innerhalb des genannten äußeren rohrförmigen Körpers (10) enthalten ist, umfassend:
- eine Vorkammer (41);
- einen Lufteinlass (42) in Verbindung mit einer externen Gasquelle;
- wobei die Vorkammer (41) in Verbindung mit dem genannten Lufteinlass steht und darauf ausgelegt ist, über den genannten Einlass (42) Gas von der genannten externen Gasquelle zu erhalten;
- ein konvergierendes Element (52), das darauf ausgelegt ist, den Strom der eintretenden Flüssigkeit zu konzentrieren;
- eine Venturikammer (44) in Fluidkontakt mit der genannten Vorkammer (41), die darauf ausgelegt ist, Gas aus der Vorkammer (41) anzusaugen, um Mikro- und Nanogasblasen in der Flüssigkeit zu erzeugen, wenn der genannte Flüssigkeitsstrom durch sie hindurchfließt; wobei die Venturikammer (44) aus einer Vielzahl von konischen Abstandshaltern (50) besteht, die in Längsrichtung entlang der Richtung a-a des Flüssigkeitsstroms ausgerichtet sind und ineinander eingreifen, wobei jede Kontaktebene (50a) zwischen den Abstandshaltern (50) Durchgänge (51) umfasst, die darauf ausgelegt sind, die Vorkammer (41) in Verbindung mit der Venturikammer (44) zu bringen, **dadurch gekennzeichnet, dass** die genannten Durchgänge (51) für das Gas von der Vorkammer (41) zur Venturikammer (44) durch eine gewisse Unebenheit der Kontaktflächen (50a) jedes Abstandshalters (50) gebildet werden.

2. Vorrichtung (1) nach Anspruch 1, wobei die Venturikammer (44) teilweise konisch und divergierend ist.

3. Vorrichtung (1) nach Anspruch 2, wobei die Wand der Venturikammer (44) im Verhältnis zur Längsachse a-a einen Winkel zwischen 0,1 und 3,5 Grad bildet.

4. Vorrichtung (1) nach einem oder mehreren der vorangegangenen Ansprüche, wobei der Durchmesser des Mundstücks der Venturikammer (44) zwischen 1/5 und 1/12 des Durchmessers des Einlasses (20) beträgt.

5. Vorrichtung (1) nach einem oder mehreren der vorangegangenen Ansprüche, wobei der Kontakt zwischen dem in der Venturikammer (44) strömenden Fluid und dem in der Vorkammer (41) vorhandenen Gas durch eine Vielzahl von Öffnungen erzielt wird.

6. Vorrichtung (1) nach einem oder mehreren der vorangegangenen Ansprüche, umfassend einen Verteiler (53), der zwischen dem genannten konvergierenden Element (52) und dem Einlass der Venturikammer (44) eingefügt und darauf ausgelegt ist, jeden Strom überschüssiger Flüssigkeit zum zentralen Teil der Vorrichtung (1) zu leiten.

7. Vorrichtung (1) nach Anspruch 6, umfassend einen Abflusskanal (54) für die überschüssige Flüssigkeit, die vom Verteiler (53) abgeleitet wird.

8. Vorrichtung (1) nach Anspruch 7, wobei der Abflusskanal (54) sich außerhalb der Venturikammer (44) befindet und dazu konzentrisch ist.

9. Vorrichtung (1) nach einem oder mehreren der vorangegangenen Ansprüche, umfassend ein divergierendes Element (55) am Auslass der Venturikammer (44).

10. Vorrichtung (1) nach Anspruch 9, umfassend ein keilförmiges Profil (60) zwischen dem genannten divergierenden Element (55) und dem Auslass (30).

11. Vorrichtung (1) nach Anspruch 10, wobei das genannte keilförmige Profil (60) an der Auslassöffnung für die Flüssigkeit aus dem divergierenden Element (55) angeordnet ist.

12. Vorrichtung (1) nach Anspruch 10 oder 11, wobei das genannte keilförmige Profil (60) an jeder gegenüberliegenden Längsseite einen Keil (60a, 60b) aufweist.

13. Verwendung der Vorrichtung (1) nach einem oder mehreren der vorangegangenen Ansprüche zur Erzeugung von Mikro- und Nanogasblasen in einer Flüssigkeit, wobei das Gas Luft und die Flüssigkeit Wasser ist.

## Revendications

1. Dispositif (1) de génération de micro et nano-bulles de gaz dans un liquide, comprenant :
un corps tubulaire externe (10) avec une extension le long d'un axe longitudinal a-a ; une entrée (20) pour un écoulement de liquide ;
une sortie (30) de l'écoulement de liquide en communication fluidique avec ladite entrée (20) ;
un corps central (40) contenu dans une zone centrale à l'intérieur dudit corps tubulaire externe (10) comprenant :
- une pré-chambre (41) ;
- une admission d'air (42) en connexion avec une source externe de gaz ;
- la pré-chambre (41) étant en connexion avec ladite admission d'air et configurée pour recevoir du gaz à travers ladite admission (42) à partir de ladite source externe de gaz ;
- un élément de convergence (52) configuré pour concentrer l'écoulement du liquide entrant ;
- une chambre Venturi (44) en contact fluidique avec ladite pré-chambre (41) configurée pour aspirer le gaz de la pré-chambre (41) pour générer des micro et nano-bulles de gaz dans le liquide lorsque ledit écoulement de liquide passe à travers celle-ci ;
où la chambre Venturi (44) est constituée d'une pluralité d'entretoises coniques (50) alignées longitudinalement le long de la direction a-a de l'écoulement de liquide et engagées les unes dans les autres, chaque plan de contact (50a) entre les entretoises (50) comprenant des passages (51) configurés pour placer la pré-chambre (41) en connexion avec la chambre Venturi (44), **caractérisé en ce que** lesdits passages (51) du gaz de la pré-chambre (41) à la chambre Venturi (44) sont munis d'une certaine rugosité des surfaces de contact (50a) de chaque entretoise (50).

2. Dispositif (1) selon la revendication 1, où la chambre Venturi (44) est partiellement conique et divergente.

3. Dispositif (1) selon la revendication 2, où la paroi de la chambre Venturi (44) forme un angle par rapport à l'axe longitudinal a-a compris entre 0,1 et 3,5 degrés.

4. Dispositif (1) selon l'une ou plusieurs des revendications précédentes, où le diamètre de l'embouchure de la chambre Venturi (44) est compris entre 1/5 et 1/12 du diamètre de l'entrée (20).

5. Dispositif (1) selon l'une ou plusieurs des revendications précédentes, où le contact entre le fluide circulant dans la chambre Venturi (44) et le gaz présent dans la pré-chambre (41) est obtenu à travers une pluralité de trous.

6. Dispositif (1) selon l'une ou plusieurs des revendications précédentes, comprenant un séparateur (53) interposé entre ledit élément de convergence (52) et l'entrée de la chambre Venturi (44) configuré pour diriger tout écoulement de liquide excédentaire vers la partie centrale du dispositif (1).

7. Dispositif (1) selon la revendication 6, comprenant un canal d'évacuation (54) du liquide excédentaire détourné par le séparateur (53).

8. Dispositif (1) selon la revendication 7, où le conduit d'évacuation (54) est externe et concentrique à la chambre Venturi (44).

9. Dispositif (1) selon l'une ou plusieurs des revendications précédentes, comprenant un élément de divergence (55) au niveau de la sortie de la chambre Venturi (44).

10. Dispositif (1) selon la revendication 9, comprenant un profil en forme de cale (60) entre ledit élément de divergence (55) et la sortie (30).

11. Dispositif (1) selon la revendication 10, où ledit profil en forme de cale (60) est positionné au niveau du trou de sortie du liquide formant l'élément de divergence (55).

12. Dispositif (1) selon la revendication 10 ou 11, où ledit profil en forme de cale (60) comporte une cale (60a, 60b) sur chaque côté longitudinal opposé.

13. Utilisation du dispositif (1) selon l'une ou plusieurs des revendications précédentes pour la génération de micro et nano-bulles de gaz dans un liquide, où le gaz est de l'air et le liquide est de l'eau.
